Europäisches Patentamt

European Patent Office

Office européen des brevets

(11) Veröffentlichungsnummer: **0 209 517**
A2

## (12) EUROPÄISCHE PATENTANMELDUNG

(21) Anmeldenummer: 86890204.0

(22) Anmeldetag: 07.07.86

(51) Int. Cl.⁴: **B 60 C 11/20**

(30) Priorität: 17.07.85 AT 2109/85

(43) Veröffentlichungstag der Anmeldung: **21.01.87**
**Patentblatt 87/4**

(84) Benannte Vertragsstaaten: **AT BE CH DE FR GB IT LI LU NL SE**

(71) Anmelder: **Kubica, Wladyslaw, Hauergasse 12/1, A-2410 Hainburg (AT)**

(72) Erfinder: **Kubica, Wladyslaw, Hauergasse 12/1, A-2410 Hainburg (AT)**

(74) Vertreter: **Rippel, Andreas, Dipl.-Ing., Maxingstrasse 34, A-1130 Wien (AT)**

(54) Fahrzeugreifen.

(57) Ein Fahrzeugreifen, insbesondere für schwere Lastkraftwagen, weist einen Korpus 1 mit einer Lauffläche 2 auf. Innerhalb der Lauffläche 2 verläuft ein Gurt 3 und quer dazu eine Radialarmierung 4. In die Lauffläche 2 eingebettet sind Schraubenfedern 5, deren Achsen annähernd radial verlaufen. Die in das Reifenmaterial eingebetteten Schraubenfedern 5 übernehmen einen Teil der auf den Reifen wirkenden Kräfte, sodass das Reifenmaterial selbst dadurch entlastet wird.

EP 0 209 517 A2

- 1 -

## Fahrzeugreifen

Die Erfindung bezieht sich auf einen Fahrzeugreifen, insbesondere für schwere Lastkraftwagen, mit einer Radialarmierung und einem Gurt.

Für schwere Lastkraftwagen, z.B. Transporter, Lader und Grader in Steinbrüchen, Bergwerken u.dgl. werden sogenannte "Off the road" (OTR) Reifen verwendet, die einen Durchmesser bis zu mehreren Metern besitzen und deren Beanspruchung extrem hoch ist. Insbesondere die Lauffläche solcher Reifen unterliegt zufolge der hohen spezifischen Belastung einer verhältnismässig starken Abnützung.

Es ist das Ziel vorliegender Erfindung, eine Verstärkung für die Lauffläche von Fahrzeugreifen zu schaffen, durch die die Lebensdauer des Reifens erhöht werden kann. Erreicht wird dies dadurch, daß zur Verstärkung der Lauffläche außerhalb des Gurtes annähernd radial verlaufende Schraubenfedern in den Reifen eingebettet sind. Die in das Reifenmaterial eingebetteten Schraubenfedern übernehmen einen Teil der auf den Reifen wirkenden Kräfte, sodaß das Reifenmaterial selbst dadurch entlastet wird.

Eine besonders wirkungsvolle Anordnung wird erreicht, wenn die Schraubenfedern miteinander zu einem räumlichen, dem Profil der Lauffläche angepaßten Gebilde verflochten sind.

Die im Rahmen der Erfindung zur Anwendung kommenden Schraubenfedern können eingängig sein, besonders zweckmässig haben sich jedoch Schraubenfedern erwiesen, die mindestens zweigängig ausgebildet sind.

Zur sicheren Einbettung der Schraubenfedern im Reifenmaterial ist es vorteilhaft, wenn die Schraubenfedern wenigstens an einem Ende einen Kopf aus dicht aneinander liegenden Windungen besitzen. Dabei sind aus Platzgründen die Köpfe nebeneinander liegender Schraubenfedern wechselweise an gegenüber liegenden Enden vorgesehen.

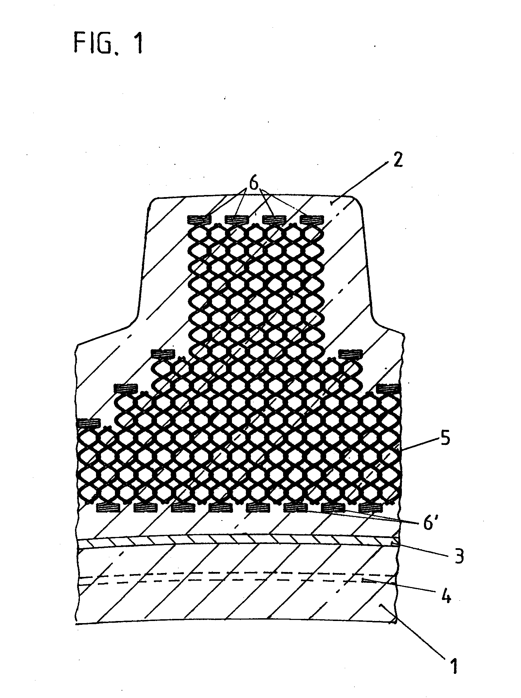

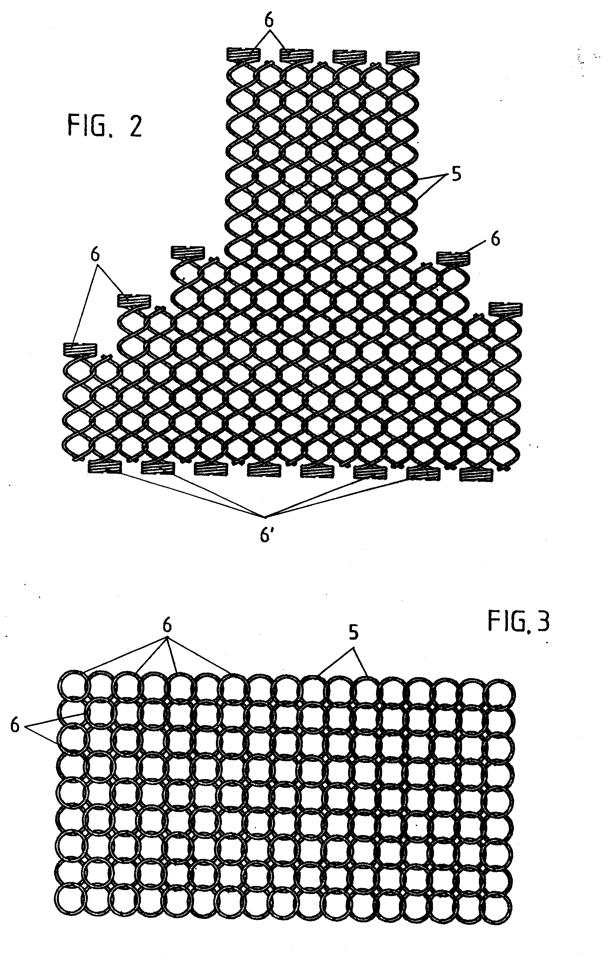

Nachstehend ist die Erfindung anhand eines in den Zeichnungen dargestellten Ausführungsbeispieles näher beschrieben. Dabei zeigen: Fig. 1 einen teilweisen Schnitt durch einen erfindungsgemässen Fahrzeugreifen, Fig. 2 in vergrößertem Maßstab das Flechtwerk der Schraubenfedern nach Fig. 1 und Fig. 3 eine Draufsicht auf das Flechtwerk.

Gemäß Fig. 1 besitzt ein Fahrzeugreifen einen Korpus 1 mit einer Lauffläche 2. Innerhalb der Lauffläche 2 verläuft ein Gurt 3 und quer dazu eine Radialarmierung 4.

In die Lauffläche 2 eingebettet sind Schraubenfedern 5, deren Achse annähernd radial verläuft.

Wie insbesondere aus den Fig. 2 und 3 ersichtlich ist, sind die Schraubenfedern 5 zweigängig ausgebildet und die Windungen nebeneinander liegender Schraubenfedern 5 sind miteinander bzw. ineinander verflochten. Insbesondere die Länge der Schraubenfedern 5 ist dabei so bemessen, daß das durch die Verflechtung entstehende räumliche Gebilde dem Profil der Lauffläche 2 angepaßt ist.

Jede der Schraubenfedern 5 besitzt an einem Ende einen Kopf 6 bzw. 6', der aus dicht aneinander liegenden Windungen besteht. Dadurch wird eine sichere Einbettung der Schraubenfedern 5 im Reifenmaterial erzielt. Die Köpfe 6, 6' nebeneinander liegender Schraubenfedern 5 sind dabei wechselweise an gegenüberliegenden Enden vorgesehen.

In der Darstellung der Zeichnungen verlaufen die Achsen der Schraubenfedern parallel zueinander. Tatsächlich verlaufen sie jedoch im wesentlichen radial, sodaß die innen liegenden Windungen etwas näher beisammen liegen als die äußeren Windungen. Bei großen Reifendurchmessern ist dieser Unterschied aber gering und im gewählten Maßstab nicht mehr darstellbar.

- 3 -

Die Erfindung ist nicht auf das dargestellte Ausführungsbeispiel beschränkt. So können z.B. eine andere Form des Kopfes und natürlich auch andere Maßverhältnisse gewählt werden. Auch eingängige bzw. mehr als zweigängige Schrauben können verwendet werden, wobei sich zwangsläufig ein anderes Flechtbild ergibt.

0209517

- 4 -

Patentansprüche

1. Fahrzeugreifen, insbesondere für schwere Lastkraftwagen, mit einer Radialarmierung und einem Gurt, dadurch gekennzeichnet, daß zur Verstärkung der Lauffläche außerhalb des Gurtes (3) annähernd radial verlaufende Schraubenfedern (5) in den Reifen eingebettet sind.

2. Fahrzeugreifen nach Anspruch 1, dadurch gekennzeichnet, daß die Schraubenfedern (5) miteinander zu einem räumlichen, dem Profil der Lauffläche (2) angepaßten Gebilde verflochten sind.

3. Fahrzeugreifen nach Anspruch 1 oder 2, dadurch gekennzeichnet, daß die Schraubenfedern (5) mindestens zweigängig ausgebildet sind.

4. Fahrzeugreifen nach einem der Ansprüche 1 bis 3, dadurch gekennzeichnet, daß die Schraubenfedern (5) wenigstens an einem Ende einen Kopf (6, 6') aus dicht aneinander liegenden Windungen besitzen.

5. Fahrzeugreifen nach Anspruch 4, dadurch gekennzeichnet, daß die Köpfe (6, 6') nebeneinander liegender Schraubenfedern (5) wechselweise an gegenüberliegenden Enden vorgesehen sind.

Wladislaw KUBICA
durch:
Patentanwalt
Dipl. Ing. Andreas Rippel

FIG. 1

6

FIG. 2

5

6

6

6'

FIG. 3

6

5

6